(19) **Europäisches Patentamt**
**European Patent Office**
**Office européen des brevets**

(11) **EP 4 757 471 A1**

(12) **EUROPEAN PATENT APPLICATION**
published in accordance with Art. 153(4) EPC

(43) Date of publication:
**10.06.2026 Bulletin 2026/24**

(51) International Patent Classification (IPC):
**H04W 72/231** (2023.01)     **H04W 56/00** (2009.01)
**H04W 72/0453** (2023.01)

(21) Application number: **24849687.9**

(22) Date of filing: **31.07.2024**

(52) Cooperative Patent Classification (CPC):
**H04W 56/00; H04W 72/0453; H04W 72/231**

(86) International application number:
**PCT/KR2024/095945**

(87) International publication number:
**WO 2025/029120 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.08.2023 KR 20230101221**

(71) Applicant: **LG Electronics Inc.
Yeongdeungpo-gu
Seoul 07336 (KR)**

(72) Inventors:
• **GO, Seongwon**
**Seoul 06772 (KR)**
• **KANG, Jiwon**
**Seoul 06772 (KR)**

(74) Representative: **Mooser, Sebastian Thomas
Wuesthoff & Wuesthoff
Patentanwälte und Rechtsanwalt PartG mbB
Schweigerstraße 2
81541 München (DE)**

(54) **METHOD FOR UPLINK TRANSMISSION AND RECEPTION, AND DEVICE THEREFOR**

(57)     A method according to an embodiment of the present disclosure comprises receiving a cell group configuration, receiving configuration information related to a first serving cell of serving cells, and transmitting an uplink signal related to the first serving cell based on a unified TCI state related to a second serving cell of the serving cells. The cell group configuration includes a list of serving cells for which a simultaneous update of unified Transmission Configuration Indicator (TCI) states is applied. An uplink timing related to the uplink signal is determined based on a TAG having an association with the unified TCI state. The TAG is related to the first TAG ID or the second TAG ID of the first serving cell to which the unified TCI state is applied.

【FIG. 4】

EP 4 757 471 A1

**Description**

[TECHNICAL FIELD]

The present disclosure relates to a method and device for uplink transmission and reception in a wireless communication system.

[BACKGROUND]

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

In the existing LTE and NR standards, in uplink timing advance configuration/indication, a single timing advance (TA) value is supported for a timing advance group (TAG) to which a specific cell or a group of cells belongs.

Multiple-DCI based Multiple-Transmission and Reception Point (M-DCI based M-TRP) operation may be performed in an environment where there is a large distance difference between a UE and different TRPs. In this case, a propagation delay difference, a slot boundary difference, and an inter-UE panel delay difference may occur between target TRPs of uplink transmission within CC/BWP. In particular, this phenomenon may occur to a greater extent in a non-ideal backhaul operation in which coordination is not performed between TRPs.

As described above, in order to compensate for the timing difference or delay that occurs between the TRPs, uplink timing needs to be determined differently for each TRP. To this end, an operation of connecting/corresponding the TAG to a TCI state of unified TCI (e.g., joint TCI state, separate TCI state (DL TCI state or UL TCI state)) has been agreed. To support TRP-specific TA (i.e., to support two TAs for two TRPs), two TAGs may be configured within one serving cell.

A CC list (a list of serving cells) may be configured for simultaneously updating TCI states for CCs (serving cells). In this instance, TCI state(s) (TCI state pool) may be configured only for a reference CC in the CC list. For CCs (e.g., non-reference CCs) other than the reference CC in the CC list, transmission/reception operations related to the CCs (non-reference CCs) may be performed based on the TCI state defined/configured for the reference CC.

[DISCLOSURE]

[TECHNICAL PROBLEM]

According to the current standard, CCs within a CC list are not assumed to belong to the same TAG(s). Therefore, any one CC (e.g., a non-reference CC) and another CC (e.g., a reference CC) in the CC list may belong to different TAG-ids. Since information for the TAG-id related to each TCI state (joint TCI state and/or UL TCI state) is configured via RRC signaling, the following problems may arise.

A TCI state (within a TCI state pool) configured for the reference CC is used for the non-reference CC. Due to the association between the TAG-id and the TCI state, the TAG-id associated/related to the reference CC may be utilized for uplink transmissions performed in the non-reference CC. In other words, a TAG-id different from the TAG-id configured for the non-reference CC may be utilized for uplink transmission related to the non-reference CC. In this case, uplink timing may not be suitable for the non-reference CC.

An object of the present disclosure is to provide a method for solving the above-described problems.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[TECHNICAL SOLUTION]

A method performed by a user equipment (UE) according to an embodiment of the present disclosure comprises receiving a cell group configuration, receiving configuration information related to a first serving cell of serving cells, and transmitting an uplink signal related to the first serving cell based on a unified TCI state related to a second serving cell of the serving cells.

The cell group configuration includes a list of serving cells for which a simultaneous update of unified Transmission Configuration Indicator (TCI) states is applied. A first Timing Advance Group (TAG) ID and a second TAG ID are configured based on the configuration information.

An uplink timing related to the uplink signal is determined based on a TAG having an association with the unified TCI state.

The TAG is related to the first TAG ID or the second TAG ID of the first serving cell to which the unified TCI state is applied.

The serving cells may correspond to Component Carriers (CCs).

The second serving cell may be based on a reference CC among CCs corresponding to the serving cells.

The first serving cell may be based on a first CC different from a reference CC among CCs corresponding to the serving cells.

Unified TCI state configurations may be absent in a bandwidth part (BWP) of the first CC.

The unified TCI state may be related to a reference BWP of the reference CC.

The unified TCI state may include TAG ID information. Based on the TAG ID information being set to a first value, the TAG may be a first TAG indicated by the first TAG ID of the first serving cell. Based on the TAG ID information being set to a second value, the TAG may be a second TAG indicated by the second TAG ID of the first serving cell.

The first TAG may be identical to or different from a TAG indicated by a first TAG ID configured for the second serving cell.

The second TAG may be identical to or different from a TAG indicated by a second TAG ID configured for the second serving cell.

The unified TCI state may be a joint TCI state or a separate TCI state.

The method may further comprise receiving a Medium Access Control-Control Element (MAC CE). The MAC CE may be related to activation and/or deactivation of the unified TCI states. Based on a serving cell indicated based on the MAC CE being a part of the serving cells, the MAC CE may be applied to the serving cells.

The unified TCI state may be a unified TCI state indicated by Downlink Control Information (DCI) among unified TCI states activated based on the MAC CE.

A user equipment (UE) according to another embodiment of the present disclosure comprises one or more transceivers, one or more processors, and one or more memories connected to the one or more processors and configured to store instructions.

The instructions, based on being executed by the one or more processors, configure the one or more processors to perform all steps of any one of the methods.

A device according to another embodiment of the present disclosure comprises one or more memories and one or more processors operably connected to the one or more memories. The one or more memories are configured to store instructions based on being executed by the one or more processors, and the instructions are configured to allow the one or more processors to perform all steps of any one of the methods.

One or more non-transitory computer readable mediums according to another embodiment of the present disclosure stores instructions. The instructions executable by one or more processors are configured to allow the one or more processors to perform all steps of any one of the methods.

A method performed by a base station according to another embodiment of the present disclosure comprises transmitting a cell group configuration, transmitting configuration information related to a first serving cell of serving cells, and receiving an uplink signal related to the first serving cell based on a unified TCI state related to a second serving cell of the serving cells.

The cell group configuration includes a list of serving cells for which a simultaneous update of unified Transmission Configuration Indicator (TCI) states is applied. A first Timing Advance Group (TAG) ID and a second TAG ID are configured based on the configuration information.

An uplink timing related to the uplink signal is determined based on a TAG having an association with the unified TCI state.

The TAG is related to the first TAG ID or the second TAG ID of the first serving cell to which the unified TCI state is applied.

A base station according to another embodiment of the present disclosure comprises one or more transceivers, one or more processors, and one or more memories connected to the one or more processors and storing instructions.

The instructions configure the one or more processors to perform all steps of the methods based on being executed by the one or more processors.

[ADVANTAGEOUS EFFECTS]

According to embodiments of the present disclosure, an uplink signal related to a first serving cell (e.g., a non-reference CC) is transmitted based on a TCI state related to a second serving cell (e.g., a reference CC). An uplink timing related to the uplink signal is determined based on a TAG related to a TAG-ID configured for the first serving cell to which the TCI state is applied.

Therefore, even if serving cells within a list for simultaneous update of TCI states belong to different TAGs (e.g., even if different TAG IDs are configured for the reference CC and the non-reference CC), ambiguity for a TAG to be used to perform uplink transmission related to a specific serving cell (the non-reference CC) can be resolved.

Furthermore, in uplink transmissions related to the first serving cell (the non-reference CC) utilizing the TCI state related to the second serving cell (the reference CC), degradation of uplink timing accuracy (i.e., when a TAG related to the second serving cell is used) can be prevented.

Uplink retransmission due to inaccurate uplink timing can also be prevented. In other words, unnecessary signaling overhead can be prevented in uplink transmission and reception procedures performed based on TCI states to which simultaneous update is applied.

Effects that could be achieved with the present disclosure are not limited to those that have been described hereinabove merely by way of example, and other effects and advantages of the present disclosure will be more clearly understood from the following description by a person skilled in the art to which the present disclosure pertains.

[BRIEF DESCRIPTION OF THE DRAWINGS]

FIG. 1 illustrates MAC RAR according to an embodiment of the present disclosure.

FIG. 2 illustrates a timing advance command MAC CE according to an embodiment of the present disclosure.

FIG. 3 illustrates a TCI state activation/deactivation MAC CE to which an embodiment of the present disclosure can be applied.

FIG. 4 is a flowchart illustrating a method performed by a user equipment according to an embodiment of the present disclosure.

FIG. 5 is a flowchart illustrating a method performed by a base station according to another embodiment of the present disclosure.

FIG. 6 illustrates configuration of a first device and a second device according to an embodiment of the present disclosure.

[DETAILED DESCRIPTION]

Hereinafter, preferred embodiments of the disclosure are described in detail with reference to the accompanying drawings. The following detailed description taken in conjunction with the accompanying drawings is intended for describing embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

Multi-Transmission/Reception Point (M-TRP) related operation

An M-TRP transmission scheme in which M TRPs transmit data to one user equipment (UE) may be divided into two main types, eMBB M-TRP transmission which is a scheme for increasing a transmission rate and URLLC M-TRP transmission which is a scheme for increasing a reception success rate and reducing latency.

UL MTRP-URLLC means that multiple TRPs receive the same data/UCI from one UE using different layer/time/frequency resources. For example, TRP 1 receives the same data/UCI from UE in resource 1, and TRP 2 receives the same data/UCI from UE in resource 2, and then shares the received data/UCI through the backhaul link connected between TRPs. A UE configured with the UL MTRP-URLLC transmission scheme transmits the same data/DCI using different layer/time/frequency resources. In this case, the UE is indicated by the BS which Tx beam and which Tx power (i.e., UL TCI state) to use in the layer/time/frequency resources transmitting the same data/DCI. For example, when the same data/UCI is transmitted in resource 1 and resource 2, the UL TCI state used in resource 1 and the UL TCI state used in resource 2 are indicated. The UL MTRP URLLC may be applied to the PUSCH/PUCCH.

SDCI or MDCI based MTRP Transmission

From a perspective of downlink control information (DCI) transmission, an M-TRP (multiple TRP) transmission scheme may be classified into i) a multiple-DCI (M-DCI) based M-TRP transmission scheme in which each TRP transmits different DCI and ii) a single DCI (S-DCI) based M-TRP transmission scheme in which one TRP transmits DCI.

R16 NR MTRP Transmission

The R16 NR standard supports S-DCI based MTRP PDSCH and M-DCI based MTRP PDSCH transmission schemes.

R16 M-DCI based MTRP PDSCH

M-DCI based MTRP PDSCH transmission is a method in which each TRP schedules and transmits PDSCH via DCI. That is, TRP 1 transmits PDSCH 1 via DCI 1, and TRP 2 transmits PDSCH 2 via DCI 2. When the PDSCH 1 and the PDSCH 2 overlap with the same frequency time resource, the two PDSCHs are received for the same RE, thereby increasing resource efficiency and increasing transmission capacity. To this end, the R16 standard has introduced a CORESET pool which is a group of multiple CORESETs, and the TRP 1 transmits PDCCH through a CORESET belonging to CORESET pool 0, and PDSCH scheduled by the corresponding PDCCH is also transmitted by the TRP 1. The TRP 2 transmits PDCCH through a CORESET belonging to CORESET pool 1, and PDSCH scheduled by the corresponding PDCCH is also transmitted by the TRP 2. For PUSCH, a specific TRP may schedule transmission of the PUSCH to a UE through a CORESET belonging to each COERSET pool. For PUCCH, the TRP 1 schedules some PUCCH resources to receive UCI, and the TRP 2 schedules remaining PUCCH resources to receive UCI. For the PUSCH or the PUCCH, channels scheduled/used by each TRP are TDMed with each other and do not overlap. Hence, an increase in the transmission capacity cannot be expected, but the UE can transmit independently the PUSCH/PUCCH to each of the TRP 1 and the TRP 2.

In addition, the UE may recognize PUSCH (or PUCCH) scheduled by DCI received via different CORESETs (or CORESETs belonging to different CORESET groups) as PUSCH (or PUCCH) transmitting to different TRPs, or recognize PUSCH (or PUCCH) of different TRPs. A scheme for UL transmission (e.g. PUSCH/PUCCH) transmitting to the different TRPs can be applied equally to UL transmission (e.g., PUSCH/PUCCH) transmitting to different panels belonging to the same TRP.

CORESET group IDs (or COERSET pool indexes with the same meaning) described/mentioned in the present disclosure may mean indexes/identification information (e.g. ID), etc. for distinguishing CORESETs for each TRP/panel. In addition, the CORESET group may be a group/union of CORESETs classified by indexes/identification information (e.g. ID)/CORESET group IDs, etc. for distinguishing the CORESETs for each TRP/panel. For example, the CORESET group ID may be specific index information defined in CORSET configuration. For example, the CORESET group may be configured/indicated/defined by an index defined in the CORESET configuration for each CORESET. And/or, the CORESET group ID may mean an index/identification information/indicator, etc. for distinguishing/identifying CORESETs configured/related to each TRP/panel, and the CORESET group ID described/mentioned in the present disclosure can be replaced and expressed with a specific index/specific identification information/specific indicator, etc. for distinguishing/identifying CORESETs configured/related to each TRP/panel. The CORESET group ID, i.e., a specific index/specific identification information/specific indicator for distinguishing/identifying CORESETs configured/related to each TRP/panel may be configured/indicated via higher layer signaling (e.g., RRC signaling)/L2 signaling (e.g., MAC-CE)/L1 signaling (e.g., DCI), and the like. For example, PDCCH detection for each TRP/panel may be configured/indicated to be performed in units of the corresponding CORESET group, and/or uplink control information (e.g., CSI, HARQ-A/N, SR) and/or uplink physical channel resources (e.g., PUCCH/PRACH/SRS resources) may be configured/indicated to be managed/controlled separately for each TRP/panel in units of the corresponding CORESET group, and/or HARQ A/N (process/retransmission) for PDSCH/PUSCH, etc. scheduled for each TRP/panel may be managed in units of the corresponding CORESET group.

For example, higher layer parameter ControlResourceSet IE (information element) is used to configure a time/frequency control resource set (CORESET). For example, the control resource set (CORESET) may be related to detection and reception of downlink control information. The ControlResourceSet IE may include a CORESET related ID (e.g., controlResourceSetID)/an index of a CORESET pool for CORESET (e.g., CORESETPoolIndex)/time/frequency resource configuration of CORESET/TCI information related to CORESET, and the like. For example, the index of the CORESET pool (e.g., CORESETPoolIndex) may be set to 0 or 1. In the description, the CORESET group may correspond to the CORESET pool, and the CORESET group ID may correspond to the CORESET pool index (e.g., CORESETPoolIndex). ControlResourceSet (i.e., CORESET) may be configured via higher layer signaling (e.g., RRC).

<Meaning of TCI state/ beam indication>

In addition, in the methods proposed by the present disclosure below, a meaning of using (/mapping) a specific TCI state (or TCI) when receiving data/DCI/UCI for a certain frequency/time/space resource is as follows.

For DL, using (mapping) the specific TCI state (or TCI) when receiving data/DCI/UCI for the certain frequency/time/space resource may mean estimating a channel from a DMRS using the QCL type and QCL RS indicated by the DL TCI state in the frequency/time/space resources, and receiving/demodulating data/DCI with the estimated channel.

For UL, using (mapping) the specific TCI state (or TCI) when receiving data/DCI/UCI for the certain frequency/time/spatial resource may mean transmitting/modulating the DMRS and data/UCI by using a Tx beam and/or Tx power indicated by the UL TCI state.

The UL TCI state may contain Tx beam or Tx power information of the UE, and spatial relation info may be configured to the UE through other parameters instead of the TCI state. The UL TCI state may mean spatial relation info of the SRS resource which may be directly indicated by UL grant DCI or is indicated through the SRI field of the UL grant DCI.

Alternatively, the UL TCI state may mean OL Tx power control parameters (j: index for open loop parameters Po & alpha (maximum 32 parameter value sets per cell), q_d: index of DL RS resource for PL measurement (maximum 4 measurements per cell), and 1: closed loop power control process index (maximum 2 processes per cell)) connected to a value indicated through the SRI field of the UL grant DCI. Alternatively, in R17 NR, UL TCI may be indicated using DL grant DCI.

<TRP classification-related extension description>

For convenience of description, the present disclosure is applied to the proposed scheme by assuming cooperative transmission/reception between 2 TRPs, but is extensively applicable to an environment of multi TRPs of 3 or more and also extensively applicable to a multi-panel environment. Different TRPs may be perceived by the UE as different TCI states (related to different CORESET pool indices).

For example, receiving, by the UE, the data/DCI using the first TCI state related to the first CORESET pool index means that the data/DCI is received from TRP 1. For example, transmitting, by the UE, the data/DCI using the first TCI state related to the first CORESET pool index means that the data/DCI is transmitted to TRP 1.

For example, receiving, by the UE, the data/DCI using the second TCI state related to the second CORESET pool index means that the data/DCI is received from TRP 2. For example, transmitting, by the UE, the data/DCI using the second TCI state related to the second CORESET pool index means that the data/DCI is transmitted to TRP 2.

Timing Advance (TA) related procedure

Uplink frame number i for transmission from a user equipment (UE) shall start $T_{TA}$ before the start of the corresponding downlink frame at the UE.

Uplink timing (e.g., uplink frame) related to $T_{TA}$ may be defined as follows.

Uplink Timing

Uplink frame number $i$ for transmission from the UE shall start $T_{\mathrm{TA}} = \left(N_{\mathrm{TA}} + N_{\mathrm{TA,offset}} + N_{\mathrm{TA,adj}}^{\mathrm{common}} + N_{\mathrm{TA,adj}}^{\mathrm{UE}}\right)T_{\mathrm{c}}$ before the start of the corresponding downlink frame at the UE where

[0065] - $N_{\mathrm{TA}}$ and $N_{\mathrm{TA,offset}}$ are given by clause 4.2 of [5, TS 38.213], except for msgA transmission on PUSCH where $N_{\mathrm{TA}}$ = 0 shall be used. $N_{\mathrm{TA,adj}}^{\mathrm{common}}$ given by clause 4.2 of [5, TS 38.213] is derived from the higher-layer parameters TACommon, TACommonDrift, and TACommonDriftVariation if configured, otherwise $N_{\mathrm{TA,adj}}^{\mathrm{common}} = 0$; $N_{\mathrm{TA,adj}}^{\mathrm{UE}}$ given by clause 4.2 of [5, TS 38.213] is computed by the UE based on UE position and serving-satellite-ephemeris-related higher-layers parameters if configured, otherwise $N_{\mathrm{TA,adj}}^{\mathrm{UE}} = 0$ .

The $T_{TA}$ may be calculated/determined based on $N_{TA}$ and $N_{TA,offset}$. $N_{TA}$ and $N_{TA,offset}$ may be configured/applied as follows.

$N_{TA}$: 1) configuring through a random access response (RAR) and 2) configuring through timing advance command (MAC-CE)

$N_{TA,offset}$: 1) configuring a specific value per serving cell and 2) applying a pre-defined value based on duplex mode/FR suitably to the serving cell

A method of configuring/applying $N_{TA,offset}$ and $N_{TA}$ described above is described in detail below.

$N_{TA,offset}$

Case 1) Method of configuring a specific value per serving cell

For example, a UE may receive configuration information (e.g., ServingCellConfigCommon Information) including information on NTA,offset from a base station. The configuration information may be received based on RRC signaling. Table 1 below shows the configuration information.

【Table 1】

| |
|---|
| – *ServingCellConfigCommon*<br><br>The IE *ServingCellConfigCommon* is used to configure cell specific parameters of a UE's serving cell. The IE contains parameters which a UE would typically acquire from SSB, MIB or SIBs when accessing the cell from IDLE. With this IE, the network provides this information in dedicated signalling when configuring a UE with a SCells or with an additional cell group (SCG). It also provides it for SpCells (MCG and SCG) upon reconfiguration with sync.<br><br>*ServingCellConfigCommon* **information element**<br>-- ASN1START<br>-- TAG-SERVINGCELLCONFIGCOMMON-START<br><br>ServingCellConfigCommon ::=        SEQUENCE {<br>    physCellId                PhysCellId                        OPTIONAL, -- Cond HOAndServCellAdd,<br>    downlinkConfigCommon        DownlinkConfigCommon                OPTIONAL, -- Cond HOAndServCellAdd<br>    uplinkConfigCommon        UplinkConfigCommon                OPTIONAL, -- Need M<br>    supplementaryUplinkConfig    UplinkConfigCommon                OPTIONAL, -- Need S<br>    n-TimingAdvanceOffset        ENUMERATED { n0, n25600, n39936 }        OPTIONAL, -- Need S<br>(...)<br>}<br>-- TAG-SERVINGCELLCONFIGCOMMON-STOP<br>-- ASN1STOP |
| ***n-TimingAdvanceOffset***<br>The N_TA-Offset to be applied for all uplink transmissions on this serving cell. If the field is absent, the UE applies the value defined for the duplex mode and frequency range of this serving cell. See TS 38.133 [14], table 7.1.2-2. |

Case 2) Method of applying a pre-defined value based on duplex mode/FR suitably to serving cell

For example, the UE may apply a pre-defined value of $N_{TA,offset}$ based on duplex mode (TDD/FDD)/FR suitably to the serving cell. Table 2 below shows the value of $N_{TA,offset}$.

【Table 2】

**Table 7.1.2-2: The Value of $N_{\text{TA offset}}$**

| Frequency range and band of cell used for uplink transmission | $N_{\text{TA offset}}$ (Unit: $T_C$) |
|---|---|
| FR1 FDD or TDD band with neither E-UTRA–NR nor NB-IoT–NR coexistence case | 25600 (Note 1) |
| FR1 FDD band with E-UTRA–NR and/or NB-IoT–NR coexistence case | 0 (Note 1) |
| FR1 TDD band with E-UTRA–NR and/or NB-IoT–NR coexistence case | 39936 (Note 1) |
| FR2 | 13792 |

[1] Note 1: The UE identifies $N_{\text{TA offset}}$ based on the information n-TimingAdvanceOffset as specified in TS 38.331 [2]. If UE is not provided with the information n-TimingAdvanceOffset, the default value of $N_{\text{TA offset}}$ is set as 25600 for FR1 band. In case of multiple UL carriers in the same TAG, UE expects that the same value of n-TimingAdvanceOffset is provided for all the UL carriers according to clause 4.2 in TS 38.213 [3] and the value 39936 of $N_{\text{TA offset}}$ can also be provided for a FDD serving cell.

[2] Note 2: Void

$N_{\text{TA}}$

Case 1) Method of configuring through a random access response (RAR)

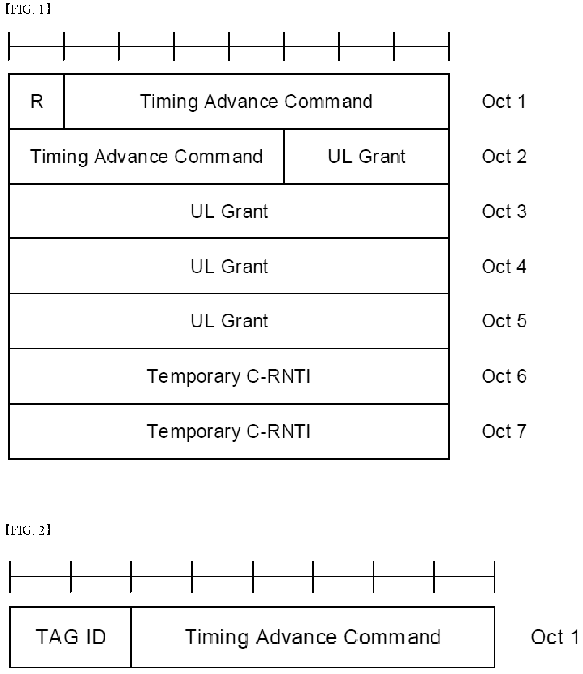

For example, in a random access procedure (e.g., 2-step RACH procedure or 4-step RACH procedure), a UE may receive an RAR from a base station. NTA may be determined/configured based on the RAR. Specifically, the RAR may include a timing advance command. The timing advance command indicates an index value (e.g., index value TA) related to timing adjustment. NTA may be determined based on the index value. The RAR may be based on MAC RAR. This is described below with reference to FIG. 1.

FIG. 1 illustrates MAC RAR according to an embodiment of the present disclosure.

Referring to FIG. 1, MAC RAR may include Reserved bit (R), Timing Advance Command, UL Grant, and Temporary C-RNTI. MAC payload of the MAC RAR is described in detail below.

6.2.3 MAC payload for Random Access Response

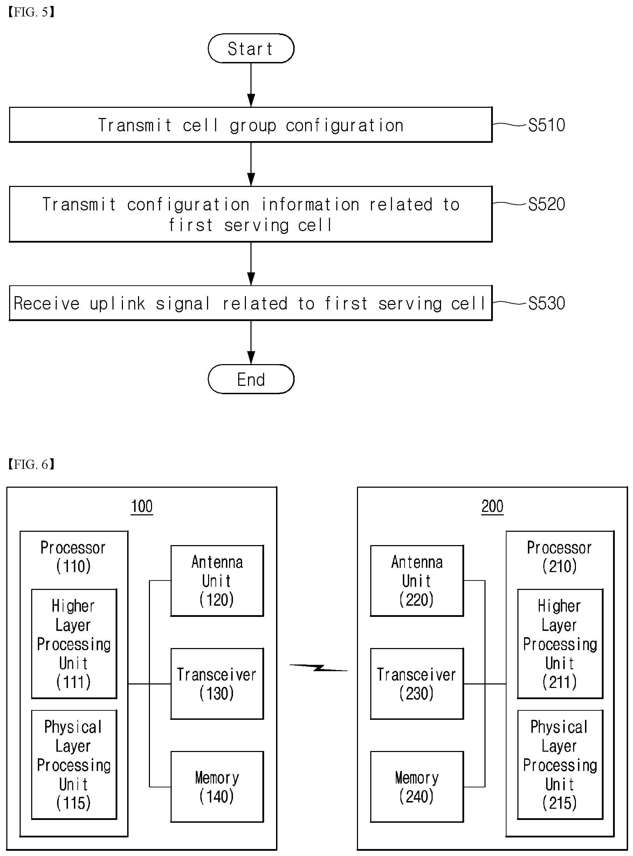

The MAC RAR is of fixed size as depicted in Figure 6.2.3-1, and consists of the following fields:

- R: Reserved bit, set to 0;
- TI: If two TAGs are configured for the Serving Cell in which the Random Access procedure is being performed, this field indicates one of the two TAGs to which the Timing Advance Command is applied. The field set to 0 indicates the first TAG ID and the field set to 1 indicates the second TAG ID. If two TAGs are not configured for the Serving Cell in which the Random Access procedure is being performed, the R bit is present instead;
- Timing Advance Command: The Timing Advance Command field indicates the index value TA used to control the amount of timing adjustment that the MAC entity has to apply in TS 38.213 [6]. The size of the Timing Advance Command field is 12 bits;
- UL Grant: The Uplink Grant field indicates the resources to be used on the uplink in TS 38.213 [6]. The size of the UL Grant field is 27 bits;
- Temporary C-RNTI: The Temporary C-RNTI field indicates the temporary identity that is used by the MAC entity during Random Access. The size of the Temporary C-RNTI field is 16 bits.

The MAC RAR is octet aligned.

Transmission timing adjustments based on the timing advance command are described below.

4.2 Transmission timing adjustments

A UE can be provided a value $N_{TA,offset}$ of a timing advance offset for a serving cell by n-TimingAdvanceOffset for the serving cell. If for a serving cell the UE is provided two coresetPoolIndex values 0 and 1 for first and second CORESETs, or is not provided coresetPoolIndex value for first CORESETs and is provided coresetPoolIndex value of 1 for second CORESETs, the UE can be provided first and second $N_{TA,offset}$ values by n-TimingAdvanceOffset and n-TimingAdvanceOffset2 for transmissions with TCI states associated with the first and second CORESETs, respectively. A UE can be provided a second $N_{TA,offset}$ value for transmissions with spatial domain filters corresponding to TCI states associated with physCellId different from physCellId for the serving cell in addition to a first $N_{TA,offset}$ value for transmissions with spatial domain filters corresponding to TCI states associated with physCellId for the serving cell. The first and second $N_{TA,offset}$ values correspond to first and second TAGs [11, TS 38.321] having an association indicated by tag-Id-ptr with first and second joint TCI states provided by dl-OrJointTCI-StateList or first and second UL TCI states provided by ul-TCI-State-List. If the UE is not provided n-TimingAdvanceOffset for a serving cell, the UE determines a default value $N_{TA,offset}$ of the timing advance offset for the serving cell as described in [10, TS 38.133].

If a UE is configured with two UL carriers for a serving cell, a same timing advance offset value $N_{TA,offset}$ applies to both carriers for transmissions on the serving cell that are associated with a same TAG. The UE does not expect to apply two $N_{TA,offset}$ values for transmissions on the SUL carrier.

Upon reception of a timing advance command for a TAG, the UE adjusts uplink timing for PUSCH/SRS/PUCCH transmission on all the serving cells in the TAG based on a value $N_{TA,offset}$ that the UE expects to be same for all the serving cells in the TAG and based on the received timing advance command where the uplink timing for PUSCH/SRS/PUCCH transmissions is the same for all the serving cells in the TAG.

For a band with synchronous contiguous intra-band EN-DC in a band combination with non-applicable maximum transmit timing difference requirements as described in Note 1 of Table 7.5.3-1 of [10, TS 38.133], if the UE indicates ul-TimingAlignmentEUTRA-NR as 'required' and uplink transmission timing based on timing adjustment indication for a TAG from MCG and a TAG from SCG are determined to be different by the UE, the UE adjusts the transmission timing for PUSCH/SRS/PUCCH transmission on all serving cells part of the band with the synchronous contiguous intra-band EN-DC based on timing adjustment indication for a TAG from a serving cell in MCG in the band. The UE is not expected to transmit a PUSCH/SRS/PUCCH in one CG when the PUSCH/SRS/PUCCH is overlapping in time, even partially, with random access preamble transmitted in another CG.

For a SCS of $2^{\mu} \cdot 15$ kHz, the timing advance command for a TAG indicates the change of the uplink timing relative to the current uplink timing for the TAG in multiples of $16 \cdot 64 \cdot T_c/2^{\mu}$. The start timing of the random access preamble is described in [4, TS 38.211].

A timing advance command [11, TS 38.321] in case of random access response or in an absolute timing advance command MAC CE or in a cell switch command, $T_A$, for a TAG indicates $N_{TA}$ values by index values of $T_A$ = 0, 1, 2, ..., 3846, where an amount of the time alignment for the TAG with SCS of $2^{\mu} \cdot 15$ kHz is $N_{TA}$ = $T_A \cdot 16 \cdot 64/2^{\mu}$. $N_{TA}$ is defined in [4, TS 38.211] and is relative to the SCS of the first uplink transmission from the UE after the reception of the random access response or absolute timing advance command MAC CE or the cell switch command.

In other cases, a timing advance command [11, TS 38.321], $T_A$, for a TAG indicates adjustment of a current $N_{TA}$ value, $N_{TA\_old}$, to the new $N_{TA}$ value, $N_{TA\_new}$, by index values of $T_A$ = 0, 1, 2,..., 63, where for a SCS of $2^{\mu} \cdot 15$ kHz, $N_{TA\_new}$ = $N_{TA\_old}$ + ($T_A$ - 31) $\cdot 16 \cdot 64/2^{\mu}$.

If a UE has multiple active UL BWPs, as described in clause 12, in a same TAG, including UL BWPs in two UL carriers of a serving cell, the timing advance command value is relative to the largest SCS of the multiple active UL BWPs. The applicable $N_{TA\_new}$ value for an UL BWP with lower SCS may be rounded to align with the timing advance granularity for the UL BWP with the lower SCS while satisfying the timing advance accuracy requirements in [10, TS 38.133].

Adjustment of an $N_{TA}$ value by a positive or a negative amount indicates advancing or delaying the uplink transmission timing for the TAG by a corresponding amount, respectively.

For a timing advance command received on uplink slot n and for a transmission other than a PUSCH scheduled by a RAR UL grant or a fallbackRAR UL grant as described in clause 8.2A or 8.3, or a PUCCH with HARQ-ACK information in response to a successRAR as described in clause 8.2A, the corresponding adjustment of the uplink transmission timing applies from the beginning of uplink slot n + $k$ + 1+$2^{\mu} \cdot K_{offset}$ where $k = \left\lceil N_{slot}^{subframe,\mu} \cdot \left( N_{T,1} + N_{T,2} + N_{TA,max} + 0.5 \right)/T_{sf} \right\rceil$, $N_{T,1}$ is a time duration in msec of $N_1$ symbols corresponding to a PDSCH processing time for UE processing capability 1 when additional PDSCH DM-RS is configured, $N_{T,2}$ is a time duration in msec of $N_2$ symbols corresponding to a PUSCH preparation time for UE processing capability 1 [6, TS 38.214], $N_{TA,max}$ is the maximum timing advance value in msec that can be provided by a TA command field of 12 bits, $N_{slot}^{subframe,\mu}$ is the number of slots per subframe, $T_{sf}$ is the subframe duration of 1 msec, and $K_{offset}$ = $K_{cell,offset}$ - $K_{UE,offset}$, where $K_{cell,offset}$ is provided by cellSpecificKoffset and $K_{UE,offset}$ is provided by a Differential Koffset MAC CE command [11, TS 38.321]; otherwise, if not respectively provided, $K_{cell,offset}$ = 0 or $K_{UE,offset} = 0$. $N_1$ and $N_2$ are determined with respect to the minimum SCS among the SCSs of all configured UL BWPs for all uplink carriers in the TAG and of all configured DL BWPs for the corresponding downlink carriers. For $\mu = 0$, the UE assumes $N_{1,0} = 14$ [6, TS 38.214]. Slot n and $N_{slot}^{subframe,\mu}$ are determined with respect to the minimum SCS among the SCSs of all configured UL BWPs for all uplink carriers in the TAG. $N_{TA,max}$ is determined with respect to the minimum SCS among the SCSs of all configured UL BWPs for all uplink carriers in the TAG and for all configured initial UL BWPs provided by initialUplinkBWP. The uplink slot n is the last slot among uplink slot(s) overlapping with the slot(s) of PDSCH reception assuming $T_{TA} = 0$, where the PDSCH provides the timing advance command and $T_{TA}$ is defined in [4, TS 38.211].

If a UE changes an active UL BWP between a time of a timing advance command reception and a time of applying a corresponding adjustment for the uplink transmission timing, the UE determines the timing advance command value based on the SCS of the new active UL BWP. If the UE changes an active UL BWP after applying an adjustment for the uplink transmission timing, the UE assumes a same absolute timing advance command value before and after the active UL BWP change.

If the received downlink timing changes and is not compensated or is only partly compensated by the uplink timing adjustment without timing advance command as described in [10, TS 38.133], the UE changes $N_{TA}$ accordingly. If a UE operates with two TAGs on an active UL BWP of a serving cell, the UE expects that a difference between a first downlink timing associated with a first TAG and a second downlink timing associated with a second TAG is not larger than the CP length for the active UL BWP unless the UE indicates larger-thanCP-capability. If a UE indicates XYZ_capability, is provided SRS-autonomousTAupdate [10, TS 38.133], and transmits SRS based on a configuration by SRS-PosResourceSet in SRS-PosRRC-InactiveConfig-ValidityArea in RRC_INACTIVE state, the UE may autonomously update $N_{TA}$ at cell reselection; else, if the UE is not provided SRS-autonomousTAupdate, the UE maintains the $N_{TA}$ of a last serving cell prior to the release of a dedicated RRC connection [11, TS 38.321].

For operation with single TAG on a serving cell, if two adjacent slots overlap due to a TA command, the latter slot is reduced in duration relative to the former slot. The UE does not change $N_{TA}$ during an actual transmission time window for a PUSCH or a PUCCH transmission [6, TS 38.214]. If the UE is not provided enableSTx2PofMDCI and operates with two TAGs on a serving cell, the UE does not expect transmissions associated with different TAGs to overlap unless the UE indicates XYZ; if the UE indicates XYZ, the UE reduces in duration a latter transmission using a first TAG to avoid overlapping with a former transmission using a second TAG.

Case 2) Method of configuring through timing advance command (MAC-CE)

For example, NTA may be determined/configured based on MAC-CE. Specifically, NTA may be determined based on timing advance command MAC CE. The timing advance command MAC CE may include a timing advance command. Since the determination of NTA based on the timing advance command is the same as what was described in the Case 1, duplicate descriptions are omitted. The timing advance command MAC CE is described below with reference to FIG. 2.

FIG. 2 illustrates timing advance command MAC CE according to an embodiment of the present disclosure.

Referring to FIG. 2, timing advance command MAC CE may include a TAG ID and a timing advance command. A payload of the timing advance command MAC CE is described in detail below.

6.1.3.4 Timing Advance Command MAC CE

The Timing Advance Command MAC CE is identified by MAC subheader with LCID as specified in Table 6.2.1-1.

It has a fixed size and consists of a single octet defined as follows (Figure 6.1.3.4-1):

- TAG Identity (TAG ID): This field indicates the TAG Identity of the addressed TAG. The TAG containing the SpCell has the TAG Identity 0. The length of the field is 2 bits;
- Timing Advance Command: This field indicates the index value TA (0, 1, 2... 63) used to control the amount of timing adjustment that MAC entity has to apply (as specified in TS 38.213 [6]). The length of the field is 6 bits.

6.1.3.4a Absolute Timing Advance Command MAC CE

The Absolute Timing Advance Command MAC CE is identified by MAC subheader with eLCID as specified in Table 6.2.1-1b.

It has a fixed size and consists of two octets defined as follows (Figure 6.1.3.4a-1):

- Timing Advance Command: This field indicates the index value TA used to control the amount of timing adjustment that the MAC entity has to apply in TS 38.213 [6]. The size of the field is 12 bits;

- TI: If two TAGs are configured for SpCell, this field indicates one of the two TAGs to which the Timing Advance Command is applied. The field set to 0 indicates the first TAG ID and the field set to 1 indicates the second TAG ID. If two TAGs are not configured for SpCell, the R bit is present instead;
- R: Reserved bit, set to 0.

TAG (Timing advance group)

The timing advance group (TAG) refers to a group of serving cells that use the same timing advance value. Table 3 below shows definition of the TAG and configuration information related to the TAG.

【Table 3】

> **Timing Advance Group**: A group of Serving Cells that is configured by RRC and that, for the cells with a UL configured, using the same timing reference cell and the same Timing Advance value. A Timing Advance Group containing the SpCell of a MAC entity is referred to as Primary Timing Advance Group (PTAG), whereas the term Secondary Timing Advance Group (STAG) refers to other TAGs.
>
> *TAG-Config*
>
> The IE *TAG-Config* is used to configure parameters for a time-alignment group.
>
> ***TAG-Config* information element**
>
> ```
> -- ASN1START
> -- TAG-TAG-CONFIG-START
>
> TAG-Config ::=           SEQUENCE {
>     tag-ToReleaseList           SEQUENCE (SIZE (1..maxNrofTAGs)) OF TAG-Id
> OPTIONAL,  -- Need N
>     tag-ToAddModList            SEQUENCE (SIZE (1..maxNrofTAGs)) OF TAG
> OPTIONAL    -- Need N
> }
>
>
> TAG ::=           SEQUENCE {
>     tag-Id                TAG-Id,
>     timeAlignmentTimer          TimeAlignmentTimer,
>     ...
> ```

> ```
> }
>
>
> TAG-Id ::=                INTEGER (0..maxNrofTAGs-1)
> ```
>
> | *tag-Id* |
> | --- |
> | Indicates the TAG of the SpCell or an SCell, see TS 38.321 [3]. Uniquely identifies the TAG within the scope of a Cell Group (i.e. MCG or SCG). |
> | *timeAlignmentTimer* |
> | The timeAlignmentTimer for TAG with ID tag-Id, as specified in TS 38.321 [3]. |
> | **maxNrofTAGs**    INTEGER ::= 4 -- Maximum number of Timing Advance Groups |

Procedure

Operations for uplink time alignment are described in detail below.

5.2 Maintenance of Uplink Time Alignment

RRC configures the following parameters for the maintenance of UL time alignment:

- timeAlignmentTimer (per TAG) which controls how long the MAC entity considers the Serving Cells belonging to the associated TAG to be uplink time aligned;
- inactivePosSRS-TimeAlignmentTimer which controls how long the MAC entity considers the Positioning SRS transmission in RRC_INACTIVE in clause 5.26 to be uplink time aligned;
- cg-SDT-TimeAlignmentTimer which controls how long the MAC entity considers the uplink transmission for CG-SDT to be uplink time aligned.

The MAC entity shall:

1> when a Timing Advance Command MAC CE is received, and if an NTA (as defined in TS 38.211 [8]) has been maintained with the indicated TAG:
2> apply the Timing Advance Command for the indicated TAG;
2> if there is ongoing Positioning SRS Transmission in RRC_INACTIVE as in clause 5.26:
3> start or restart the inactivePosSRS-TimeAlignmentTimer associated with the indicated TAG.
2> if CG-SDT procedure triggered as in clause 5.27 is ongoing:
3> start or restart the cg-SDT-TimeAlignmentTimer associated with the indicated TAG.
2> else:
3> start or restart the timeAlignmentTimer associated with the indicated TAG.
1> when a Timing Advance Command is received in a Random Access Response message for a Serving Cell belonging to a TAG or in a MSGB for an SpCell:
2> if the Random Access Preamble was not selected by the MAC entity among the contention-based Random Access Preamble:
3> apply the Timing Advance Command for this TAG;
3> start or restart the timeAlignmentTimer associated with this TAG.
2> else if the timeAlignmentTimer associated with this TAG is not running:
3> apply the Timing Advance Command for this TAG;
3> start the timeAlignmentTimer associated with this TAG;
3> when the Contention Resolution is considered not successful as described in clause 5.1.5; or
3> when the Contention Resolution is considered successful for SI request as described in clause 5.1.5, after transmitting HARQ feedback for MAC PDU including UE Contention Resolution Identity MAC CE:
4> stop timeAlignmentTimer associated with this TAG.
3> when the Contention Resolution is considered not successful as described in clause 5.1.5:
4> if CG-SDT procedure triggered as in clause 5.27 is ongoing:
5> set the NTA value to the value before applying the received Timing Advance Command as in TS 38.211 [8].
3> when the Contention Resolution is considered successful for Random Access procedure while the CG-SDT procedure is ongoing:
4> stop timeAlignmentTimer associated with this TAG;
4> start or restart the cg-SDT-TimeAlignmentTimer associated with this TAG.
3> when the Contention Resolution is considered successful for Random Access procedure while SRS transmission in RRC _INACTIVE is ongoing:
4> start or restart the inactivePosSRS-TimeAlignmentTimer associated with this TAG.
2> else:
3> ignore the received Timing Advance Command.
1> when an Absolute Timing Advance Command is received in response to a MSGA transmission including C-RNTI MAC CE as specified in clause 5.1.4a:
2> apply the Timing Advance Command for PTAG;
2> if there is ongoing Positioning SRS Transmission in RRC_INACTIVE as in clause 5.26:
3> start or restart the inactivePosSRS-TimeAlignmentTimer associated with the indicated TAG.
2> if CG-SDT procedure is ongoing:
3> start or restart the cg-SDT-TimeAlignmentTimer associated with PTAG.
2> else:
3> start or restart the timeAlignmentTimer associated with PTAG.
1> when the indication is received from upper layer for stopping the inactivePosSRS-TimeAlignmentTimer:
2> stop the inactivePosSRS-TimeAlignmentTimer.

1> when the indication is received from upper layer for starting the inactivePosSRS-TimeAlignmentTimer:
2> start or restart the inactivePosSRS-TimeAlignmentTimer.
1> when instruction from the upper layer has been received for starting the cg-SDT-TimeAlignmentTimer:
2> start the cg-SDT-TimeAlignmentTimer.
1> when instruction from the upper layer has been received for stopping the cg-SDT-TimeAlignmentTimer:
2> consider the cg-SDT-TimeAlignmentTimer as expired.
1> when instruction from the upper layer has been received for starting the TimeAlignmentTimer associated with PTAG:
2> start the TimeAlignmentTimer associated with PTAG.
1> when a timeAlignmentTimer expires:
2> if the timeAlignmentTimer is associated with the PTAG:
3> flush all HARQ buffers for all Serving Cells;
3> notify RRC to release PUCCH for all Serving Cells, if configured;
3> notify RRC to release SRS for all Serving Cells, if configured;
3> clear any configured downlink assignments and configured uplink grants;
3> clear any PUSCH resource for semi-persistent CSI reporting;
3> consider all running timeAlignmentTimers as expired;
3> maintain NTA (defined in TS 38.211 [8]) of all TAGs.
2> else if the timeAlignmentTimer is associated with an STAG, then for all Serving Cells belonging to this TAG:
3> flush all HARQ buffers;
3> notify RRC to release PUCCH, if configured;
3> notify RRC to release SRS, if configured;
3> clear any configured downlink assignments and configured uplink grants;
3> clear any PUSCH resource for semi-persistent CSI reporting;
3> maintain NTA (defined in TS 38.211 [8]) of this TAG.
1> when the inactivePosSRS-TimeAlignmentTimer expires:
2> notify RRC to release Positioning SRS for RRC _INACTIVE configuration(s).
1> when the cg-SDT-TimeAlignmentTimer expires:
2> clear any configured uplink grants;
2> if a PDCCH addressed to the MAC entity's C-RNTI after initial transmission for the CG-SDT with CCCH message has not been received:
3> consider ongoing CG-SDT procedure as terminated;
3> indicate the expiry of cg-SDT-TimeAlignmentTimer to the upper layer.
2> flush all HARQ buffers;
2> maintain NTA (defined in TS 38.211 [8]) of this TAG.

When the MAC entity stops uplink transmissions for an SCell due to the fact that the maximum uplink transmission timing difference between TAGs of the MAC entity or the maximum uplink transmission timing difference between TAGs of any MAC entity of the UE is exceeded, the MAC entity considers the timeAlignmentTimer associated with the SCell as expired.

The MAC entity shall not perform any uplink transmission on a Serving Cell except the Random Access Preamble and MSGA transmission when the timeAlignmentTimer associated with the TAG to which this Serving Cell belongs is not running, CG-SDT procedure is not ongoing or SRS transmission in RRC _INACTIVE as in clause 5.26 is not on-going.

Furthermore, when the timeAlignmentTimer associated with the PTAG is not running, CG-SDT procedure is not ongoing and SRS transmission in RRC _INACTIVE as in clause 5.26 is not ongoing, the MAC entity shall not perform any uplink transmission on any Serving Cell except the Random Access Preamble and MSGA transmission on the SpCell.

The MAC entity shall not perform any uplink transmission except the Random Access Preamble and MSGA transmission when the cg-SDT-TimeAlignmentTimer is not running during the ongoing CG-SDT procedure as triggered in clause 5.27. The MAC entity shall not perform any uplink transmission except the Random Access Preamble and MSGA transmission when inactivePosSRS-TimeAlignmentTimer is not running during the procedure for SRS transmission in RRC INACTIVE as in clause 5.26.

The contents described above may be applied in combination with methods proposed in the present disclosure to be described below or may be supplemented to clarify technical features of the methods proposed in the present disclosure. Methods to be described below are just distinguished for convenience of description and it is needless to say that some components of any one method may be substituted with some components of another method or may be applied in combination with each other.

According to 3GPP standards up to NR Rel-17, timing advance (TA) setting for UE uplink transmission of the base station to compensate for the propagation delay between the base station and the UE may be performed through higher layer signaling. Further, a TA for a specific group of cell(s) may be set/managed separately through a concept/definition of a timing advance group (TAG).

Up to now, a method of supporting multiple TA values within a specific cell has not been supported. However, considering a scenario in which there is a large difference in distance from different target TRPs to the UE upon M-TRP UL transmission, enhancement will be performed so that a plurality of (two) TA values can be set/indicated in a specific CC/BWP.

In this case, it is necessary to discuss how the base station configures/indicates the plurality of TA values to the UE or/and how a connection relationship between the plurality of TA values and UE UL channel/RS is performed. As described in Rel-18 MIMO WID objective (RP-213598) of Table 4 below, the configuration of TA values for multi-DCI (M-DCI) based M-TRP operation is considered.

[Table **4**]

| |
|---|
| 5. Study, and if justified, specify the following<br>  - Two TAs for UL multi-DCI for multi-TRP operation<br>  - Power control for UL single DCI for multi-TRP operation where unified TCI framework extension in objective 2 is assumed.<br>  For the case of simultaneous UL transmission from multiple panels, the operation will only be limited to the objective 6 scenarios. |

Here, the TA (TA value) may be based on the description of FIG. 2 and the contents described in the timing advance (TA) related procedure described above.

In RAN1 and RAN2 standards prior to Rel-18, the base station manages UE TA values through values called $N_{TA}$ and $N_{TA,offset}$. The base station may set $N_{TA}$ as follows. The base station may i) set $N_{TA}$ via RAR MAC CE or ii) set $N_{TA}$ via timing advance command MAC CE (TA command MAC CE). In addition, the base station may utilize the concept of the Timing Advance Group (TAG) to configure up to 4 TAGs per UE for a specific cell or cell combination and perform update/management of an $N_{TA}$ value for each TAG.

As described in WID, a scenario to support two TA values is M-DCI based M-TRP operation. In the M-DCI based M-TRP operation, each TRP may be classified based on CORESET pool indexes associated with CORESET(s) existing in a BWP. Based on the CORESET pool indexes, each TRP may be classified into i) a TRP performing DL transmission (i.e., PDCCH, PDSCH) or/and ii) a target TRP for UL transmission. For example, CORESET 0 and 1 set to CORESET pool index 0 may correspond to TRP 1, and CORESET 2 and 3 set to CORESET pool index 1 may correspond to TRP 2.

In Rel-18 MIMO, an agreement is reached regarding two TAs, as shown in Table 5 below.

[Table 5]

| |
|---|
| **Agreement**<br>Enhancements on two TAs for UL multi-DCI for multi-TRP operation are applicable to both FR1 and FR2.<br>**Agreement**<br>For multi-DCI based multi-TRP operation with two TAs, support configuring two TAGs belonging to a serving cell.<br>**Agreement**<br>For multi-DCI multi-TRP operation with two TAs, up to two n-TimingAdvanceOffset value per serving cell is supported<br>**Agreement**<br>For multi-DCI multi-TRP operation with two TAs in a CC, two DL reference timings are supported where each DL reference timing is associated with one TAG<br>    • baseline assumption is that the Rx timing difference between the two DL reference timings is no larger than CP length<br>    • as an optional UE capability, Rx timing difference between the two DL reference timings can be assumed to be larger than CP length<br>        • FFS: the maximum Rx timing difference (could be up to RAN4)<br>        • Other than UE capability details and relevant configuration, no additional RAN1 specification enhancement specific for this case is expected<br>**Agreement**<br>Multi-DCI multi-TRP operation with two TAs is supported for Rel-15/16/17 TCI frameworks and unified TCI framework extension discussed in 9.1.1.1 as well as UL beam indication via spatial relation.<br>**Agreement** |

(continued)

| For associating TAGs to target UL channels/signals for multi-DCI based multi-TRP operation, support the following: Associate TAG to TCI-state |
| --- |
| • Associate TAG ID with UL/joint TCI state |
| • For UL transmission, the TAG ID associated with the UL/joint TCI state is utilized |
| • A baseline is UE expects that the [activated] UL/joint TCI states [of UL signals/channels] associated to one CORESET Pool Index correspond to one TAG |
| • Working Assumption: A UE may report that it supports that the [activated] UL/joint TCI states [of UL signals/channels] associated to one CORESETPoolIndex correspond to both TAGs |
| FFS: on how to handle association when Rel-15/16 spatial relation framework is used for |
| • PUCCH |
| • DG/CG Type 1/Type 2 PUSCH |
| • AP/SP/P SRS |
| **Agreement** |
| For associating TAGs to target UL channels/signals for multi-DCI based multi-TRP operation, the baseline feature is revised as follows: |
| • UE expects that the UL/joint TCI states of UL signals/channels associated to one CORESET Pool Index correspond to one TAG |
| • Association of TAG ID with UL/joint TCI state is via RRC configuration |
| ▪ Above does not impact the association of the indicated TCI states and coresetPoolIndex values as agreed in previous meetings in 9.1.1.1. |

As described above, it was discussed that two TAGs can be configured to manage two TA values in one serving cell, and it was also agreed that a reference timing to apply the TA value managed in each TAG would support two DL reference timings in one serving cell.

In addition, it was agreed that the PDCCH ordered CFRA mechanism would be utilized for the two TA acquisitions. Discussions were held about uplink resources and a connection relationship between the two TAs as to which uplink transmissions the two acquired TAs (TAGs) should be utilized for. As a result, it was agreed to associate the TAG ID with the UL and/or joint TCI state (via RRC signaling) for the association between the two TAGs configured within the serving cell and the UL channel/RS, as in the agreement. In this isntance, if there is a misalignment between a group of cell(s) constituting the TAG for two TA operation in a specific CC/BWP and a CC list for simultaneous multiple CC TCI activation/update, ambiguity may occur in the UE operation when performing simultaneous TCI activation/update in multi-CC because a TAG ID updated through TCI activation/update is different from a TAG ID configured for the corresponding CC. For example, it is assumed that CC #1 and CC #2 are configured for TAG ID #1, CC #1 and CC #2 are configured for TAG ID #2, CC #3 and CC #4 are configured for TAG ID #3, and CC #3 and CC #4 are configured for TAG ID #4. In this case, if four CCs from the CC #1 to the CC #4 are configured in the CC list for the simultaneous multiple CC TCI activation/update (especially if the reference CC is CC #1), the TCI activation/update is performed by TCI states (associated with TAG ID #1 or #2) configured in the CC #1, but a contradiction occurs because the CC #3 and the CC #4 are associated with TAG ID #3 and #4.

To solve the problems, the present dsiclosure proposes a TAG CC grouping method and a method of configuring/managing a CC list for simultaneous multiple CC TCI activation/update for multiple CCs of a UE by a base station when multiple TAs are supported for specific CC/BWP(s) of the UE.

In the present disclosure, "/" may be interpreted as "and," "or," or "and/or" depending on the context.

Before describing the invention, the following describes a CC grouping method for TAG configuration in the existing standards and a simultaneous multiple CC TCI activation/update method in the Rel-17 unified TCI framework.

Table 6 below shows a CC grouping method for TAG configuration. For TAG IDs, a base station configures a UE with a TAG ID to which a corresponding cell will belong via *ServingCellConfig.*

【Table 6】

*ServingCellConfig* **information element**

-- ASN1START

-- TAG-SERVINGCELLCONFIG-START


ServingCellConfig ::=          SEQUENCE {

   tdd-UL-DL-ConfigurationDedicated    TDD-UL-DL-ConfigDedicated

OPTIONAL,  -- Cond TDD

   initialDownlinkBWP            BWP-DownlinkDedicated                    OPTIONAL, --

Need M

   downlinkBWP-ToReleaseList        SEQUENCE (SIZE (1..maxNrofBWPs)) OF BWP-Id

OPTIONAL,  -- Need N

   downlinkBWP-ToAddModList        SEQUENCE (SIZE (1..maxNrofBWPs)) OF BWP-Downlink

OPTIONAL,  -- Need N

   firstActiveDownlinkBWP-Id        BWP-Id                        OPTIONAL,  -- Cond

SyncAndCellAdd

(…)

   defaultDownlinkBWP-Id          BWP-Id                        OPTIONAL,  -- Need S

   uplinkConfig            UplinkConfig                    OPTIONAL,  -- Need M

   supplementaryUplink          UplinkConfig                    OPTIONAL,  -- Need M

   pdcch-ServingCellConfig        SetupRelease { PDCCH-ServingCellConfig }

OPTIONAL,  -- Need M

   pdsch-ServingCellConfig        SetupRelease { PDSCH-ServingCellConfig }

OPTIONAL,  -- Need M

   csi-MeasConfig            SetupRelease { CSI-MeasConfig }            OPTIONAL, --

Need M

   sCellDeactivationTimer          ENUMERATED {ms20, ms40, ms80, ms160, ms200, ms240,

        ms320, ms400, ms480, ms520, ms640, ms720,

        ms840, ms1280, spare2,spare1}    OPTIONAL,  -- Cond

ServingCellWithoutPUCCH

   crossCarrierSchedulingConfig        CrossCarrierSchedulingConfig                OPTIONAL, --

Need M

   **tag-Id**              **TAG-Id,**

   dummy1                ENUMERATED {enabled}                OPTIONAL,  -- Need

R

   pathlossReferenceLinking        ENUMERATED {spCell, sCell}                OPTIONAL, -

- Cond SCellOnly

   servingCellMO            MeasObjectId                    OPTIONAL,  -- Cond

MeasObject


For the current Rel-18 two TA operation, standardization discussions are underway to allow up to two TAG IDs
(i.e., new tag-id2 introduction) of a specific cell configured through ServingCellConfig as shown below.

| ServingCellConfig | tag-id2 | This parameter provides the configured second TAG ID of the serving cell. | 0..maxNrorTAGs-1 |
|---|---|---|---|

A simultaneous multiple CC TCI activation/update method in Rel-17 unified TCI framework is described in detail below.

In Rel-17 unified TCI, the following indicated TCI management operations have been standardized. One beam indication may be performed via DL grant/non-grant DCI for a specific CC/BWP. Specifically, for one beam indication for a preconfigured DL/UL channel/RS, one TCI state among up to eight activated TCI states may be indicated based on a TCI state field of the DCI.

In addition, the simultaneous multiple CC TCI update operation has also been standardized. The simultaneous multiple CC TCI update operation is as follows. The indicated TCI (i.e., TCI state) is applied to not only a specific CC but also all CCs included in a CC list configured via RRC signaling.

For the simultaneous multiple CC TCI update operation described above, it may be assumed that TCI state(s) is configured as in the following two methods.

Method i: It may be assumed that TCI state(s) is configured to each CC in a CC list.

Method ii: It may be assumed that TCI state(s) (TCI state pool) is configured only to a specific CC/BWP (e.g., a reference BWP of a reference CC) in a CC list.

In the Method i, the simultaneous multiple CC TCI update operation may be performed as follows.

The base station transmits a TCI state activation/deactivation MAC CE to the UE. Based on the TCI state activation/deactivation MAC CE, the same TCI state ID(s) (up to 8 TCI state ID(s)) are activated to codepoints of a TCI state field based on DCI in all the CCs in the CC list. When the UE receives DCI that updates the indicated TCI in a specific CC in the CC list, the UE may update DL and/or UL beams to the indicated TCI (TCI state ID) for all the CCs in the CC list.

In the Method ii, the simultaneous multiple CC TCI update operation may be performed as follows.

The base station performs the TCI state activation for all the CCs in the CC list. Specifically, up to 8 (or 16) TCI states are activated among the TCI state IDs based on (the reference BWP of) the reference CC. When the UE receives DCI that updates the indicated TCI in a specific CC in the CC list, the UE may update DL and/or UL beams to the indicated TCI (TCI state ID) for all the CCs in the CC list.

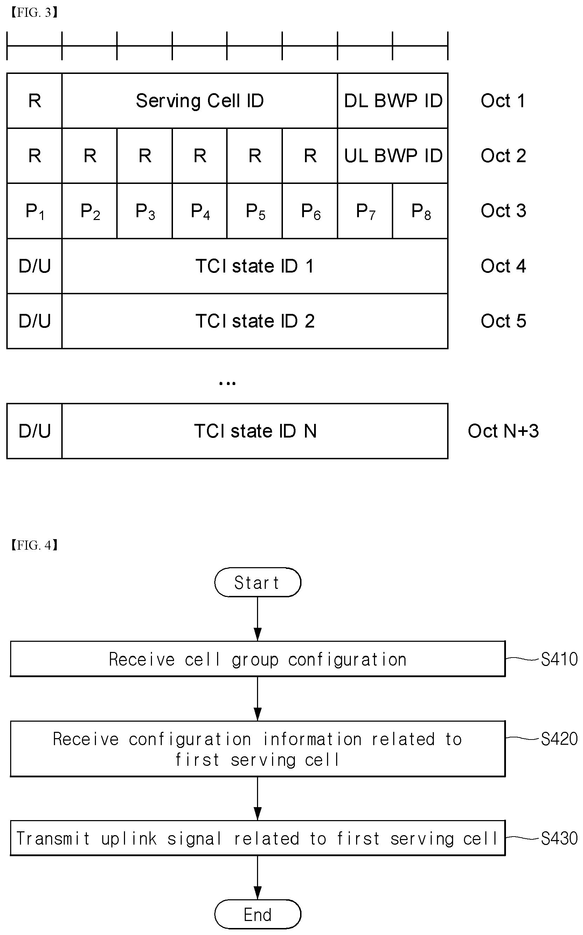

The MAC CE described above is described in detail below with reference to FIG. 3.

FIG. 3 illustrates a TCI state activation/deactivation MAC CE to which an embodiment of the present disclosure can be applied. Each field in the MAC CE is described in detail below.

6.1.3.47 Unified TCI States Activation/Deactivation MAC CE

The Unified TCI States Activation/Deactivation MAC CE is identified by a MAC subheader with eLCID as specified in Table 6.2.1-1b. It has a variable size consisting of following fields:

- Serving Cell ID: This field indicates the identity of the Serving Cell for which the MAC CE applies. The length of the field is 5 bits. If the indicated Serving Cell is configured as part of a simultaneousU-TCI-UpdateList1, simultaneousU-TCI-UpdateList2, simultaneousU-TCI-UpdateList3 or simultaneousU-TCI-UpdateList4 as specified in TS 38.331 [5], this MAC CE applies to all theServing Cells in the set simultaneousU-TCI-UpdateList1, simultaneousU-TCI-UpdateList2, simultaneousU-TCI-UpdateList3 or simultaneousU-TCI-UpdateList4, respectively;
- DL BWP ID: This field indicates a DL BWP for which the MAC CE applies as the codepoint of the DCI bandwidth part indicator field as specified in TS 38.212 [9]. The length of the BWP ID field is 2 bits;
- UL BWP ID: This field indicates a UL BWP for which the MAC CE applies as the codepoint of the DCI bandwidth part indicator field as specified in TS 38.212 [9]. If value of unifiedTCI-StateType in the Serving Cell indicated by Serving Cell ID is joint, this field is considered as the reserved bits. The length of the BWP ID field is 2 bits;
- Pi: This field indicates whether each TCI codepoint has multiple TCI states or single TCI state. If Pi field is set to 1, it indicates that ith TCI codepoint includes the DL TCI state and the UL TCI state. If Pi field is set to 0, it indicates that ith TCI codepoint includes only the DL/joint TCI state or the UL TCI state. The codepoint to which a TCI state is mapped is determined by its ordinal position among all the TCI state ID fields;
- D/U: This field indicate whether the TCI state ID in the same octet is for joint/downlink or uplink TCI state. If this field is set to 1, the TCI state ID in the same octet is for joint/downlink. If this field is set to 0, the TCI state ID in the same octet is for uplink;
- TCI state ID: This field indicates the TCI state identified by TCI-StateId as specified in TS 38.331 [5]. If D/U is set to 1, 7-bits length TCI state ID i.e. TCI-StateId as specified in TS 38.331 [5] is used. If D/U is set to 0, the most significant bit of TCI state ID is considered as the reserved bit and remainder 6 bits indicate the TCI-UL-State-Id as specified in TS 38.331 [5]. The maximum number of activated TCI states is 16;
- R: Reserved bit, set to 0.

Table 7 below shows a method of indicating a TCI state in Rel-17 unified TCI.

[Table 7]

| When tci-PresentInDCI is set as 'enabled' or tci-PresentDCI-1-2 is configured for the CORESET, a UE configured with dl-OrJoint-TCIStateList with activated TCIState or UL-TCIState receives DCI format 1_1/1_2 providing indicated TCIState or UL-TCIState for a CC or all CCs in the same CC list configured by simultaneousTCI-Update-List1-r17, simultaneousTCI-UpdateList2-r17, simultaneousTCI-UpdateList3-r17, simultaneousTCI-UpdateList4-r17. The DCI format 1_1/1_2 can be with or without, if applicable, DL assignment. If the DCI format 1_1/1_2/ is without DL assignment, the UE can assume the following: |
|---|
|    - CS-RNTI is used to scramble the CRC for the DCI |
|    - The values of the following DCI fields are set as follows: |
|    - RV = all '1's |
|    - MCS = all '1's |
|    - NDI = 0 |
|    - Set to all '0's for FDRA Type 0, or all '1's for FDRA Type 1, or all '0's for dynamicSwitch (same as in Table 10.2-4 of [6, TS 38.213]). |

Problem 1

The Method ii of the simultaneous multiple CC TCI update operation may have the following problem.

When the TAG-id is configured in a joint TCI state and/or UL TCI state (via RRC signaling) for two TA operation of the UE, the non-reference CC and the reference CC in the CC list for simultaneous TCI update may belong to different TAGs. Since the TCI state (within the TCI state pool) configured for the reference CC is utilized in the non-reference CC, a TAG-id associated/related to the reference CC may also be used as the TAG-id. In this case, ambiguity may occur in the UE operation because the TAG-id configured for the non-reference CC and the TAG-id configured for the reference CC are different.

For example, it is assumed that TAG-id #1 and TAG-id #2 are configured for CC #1, which is the reference CC, and TAG-id #3 and TAG-id #4 are configured for CC #2, which is the non-reference CC. In addition, it is assumed that the CC #1 and the CC #2 are configured in the CC list for simultaneous multiple CC TCI update operation. The TCI activation/update is performed based on TCI states (related to TAG-id #1 and/or TAG-id #2) configured for the CC #1. Uplink transmission based on the CC #2 is performed based on TCI state(s) (related to TAG-id #1 and/or TAG-id #2), whereas the CC #2 is related to TAG-id #3 and TAG-id #4, which causes a contradiction.

Proposal 1

To solve the problem 1, the UE may expect that configuration of a group of cell(s) for TAG configuration (for two TA operation) includes a CC list for simultaneous multiple CC TCI update.

For example, the UE may expect that the CCs within the group of cell(s) for TAG configuration (for two-TA operation) and the CCs in the CC list for simultaneous multiple CC TCI update are identical.

For example, the UE may expect that a combination of CCs in the CC list configured to the UE is a part of a combination of the CCs within the group of cell(s) for TAG configuration.

For example, the UE may not expect that (a combination of) the TAG-ID(s) configured for the non-reference CC and the reference CC in the CC list for simultaneous multiple CC TCI update are different. This configuration may be enforced by the base station.

According to the proposal 1, configuration of the group of cell(s) for TAG configuration has a dependency with configuration of the CC list for simultaneous multiple CC TCI update. Specifically, the non-reference CC in the CC list for simultaneous multiple CC TCI update configured to the UE unconditionally belongs to the same TAG as the reference CC. Therefore, the following effect can be derived. There is no ambiguity where the non-reference CC uses the TAG-ID related to the TCI state of the reference CC.

For example, the present embodiment may be applied only to the Method ii of the simultaneous multiple CC TCI update operation. For example, the present embodiment may be applied to both the Method i and the Method ii.

Proposal 2

A method of solving the ambiguity where a TAG-ID configured in a UE-specific serving cell and a TAG-ID configured in a TCI state for uplink transmission are different is described in detail below.

Proposal 2-1

If the Method i is assumed for the simultaneous multiple CC TCI update operation, the following embodiment may be considered.

In the existing UE operation, when the simultaneous multiple CC TCI update is performed, a TCI state ID within a TCI state pool configured to each CC/BWP is utilized in each CC/BWP. Therefore, the UE can perform uplink transmission by utilizing TAG-id(s) configured (via RRC signaling) in a configured joint TCI state and/or UL TCI state of each CC/BWP.

For example, it is assumed that the TAG-id is configured as follows.

    TAG-id #1: CC #1, CC #2
    TAG-id #2: CC #1, CC #2
    TAG-id #3: CC #3, CC #4
    TAG-id #4: CC #3, CC #4

Four CCs including CC #1 to CC #4 may be configured in a CC list for simultaneous multiple CC TCI update. (Since the TCI states configured to each CC/BWP are utilized for operation in each CC/BWP), there is no ambiguity even if TCI updates are performed simultaneously for all CCs in the CC list. Specifically, the uplink transmission is performed using TCI state(s) related/associated with TAG-id #1 and/or TAG-id #2 in CC #1 and CC #2. The uplink transmission is performed using TCI state(s) related/associated with TAG-id #3 and/or TAG-id #4 in CC #3 and CC #4.

Proposal 2-2

If the Method ii is assumed for the simultaneous multiple CC TCI update operation, the following embodiment may be considered.

If the TAG-ids configured in the reference CC and the non-reference CC are different as in the above-described problem 1, a problem occurs in which the TAG-id(s) configured in the non-reference CC and the TAG-id(s) (associated with the TCI state) to be used for uplink transmission in the non-reference CC are different. In order to solve the problem, the UE may operate based on the following method 1) or method b).

Method a) (Even if the TAG-id(s) configured in the reference CC and the non-reference CC are different), the UE performs uplink transmission by utilizing the TAG-id(s) configured/connected to the TCI state of the reference CC in the non-reference CC. In other words, the TAG-id(s) configured in the non-reference CC may be ignored, or the TAG-id(s) configured in the non-reference CC may be overridden by the TAG-id(s) configured in the reference CC.

Method b) The UE may operate by ignoring or overriding the TAG-id(s) configured in the TCI state of the reference CC to be used for uplink transmission in the non-reference CC. For example, based on whether the TAG-id configured in an indicated TCI, in which update is indicated by DCI, is a first TAG (e.g., tag-Id, TAG-id with lowest ID, etc. in RRC configuration) or a second TAG (e.g., tag-Id2, TAG-id with highest ID, etc. in RRC configuration) in the reference CC, the UE may perform the uplink transmission by utilizing the first TAG and/or the second TAG configured in the non-reference CC. In other words, based on the TAG-id configured in the TCI state of the reference CC being a first value (e.g., a value n0 representing the first TAG), the UE may perform the uplink transmission by utilizing the first TAG (indicated by a first TAG ID) configured in the non-reference CC. Based on the TAG-id configured in the TCI state of the reference CC being a second value (e.g., a value n1 representing the second TAG), the UE may perform the uplink transmission by utilizing the second TAG (indicated by a second TAG ID) configured in the non-reference CC.

For example, it is assumed that the TAG-id is configured as follows.

    TAG-id #1: CC #1(reference CC), CC #2
    TAG-id #2: CC #1(reference CC), CC #2
    TAG-id #3: CC #3, CC #4
    TAG-id #4: CC #3, CC #4

It is assumed that four CCs including CC #1 to CC #4 are configured in the CC list for simultaneous multiple CC TCI update, and the reference CC is CC #1. When the TCI update is performed simultaneously for all CCs in the CC list, the TCI state(s) configured and indicated in CC #1 are used for the uplink transmission in all the CCs (CC #1 to CC #4) in the CC list.

For CC #1 and CC #2, since the uplink transmission is performed based on the TCI state related/associated with TAG-id #1 and/or TAG-id #2 (of CC #1), the above-described ambiguity does not occur.

In CC #3 and CC #4, the TCI state of CC #1 is used for the uplink transmission by the method b) of the proposal 2-2. In this instance, the uplink transmission is performed based on TAG-id #3 and/or TAG-id #4 (not TAG-id #1 and/or TAG-id #2 configured in CC #1). For example, based on information related to the TAG ID configured in the TCI state of CC #1 being a first value (e.g., a value representing TAG-id #1), the uplink transmission may be performed based on the first TAG indicated by a first TAG ID (TAG-id #3) configured in CC #3/CC #4. For example, based on information related to the TAG ID configured in the TCI state of CC #1 being a second value (e.g., a value representing TAG-id #2), the uplink transmission may be performed based on the second TAG indicated by a second ID (TAG-id #4) configured in CC #3/CC #4. Therefore, the above-described ambiguity does not occur.

The embodiments can operate based on combinations of specific embodiments.

An example of the UE (base station) operation based on at least one of the above-described embodiments (e.g., at least one of the proposals 1 and 2) is as follows.

1) A UE (a base station) receives (transmits) a configuration related to two TAGs (two TAs) within a specific serving cell.

The configuration may include a relation between TAG IDs and UL resources.
The configuration may include a configuration of a group of cell(s) related to the two TAGs and a CC list configuration related to simultaneous multiple CC TCI activation/update based on the proposals 1 and 2.
Before/after the configuration, two TA acquisitions (using PDCCH ordered CFRA) may be performed for each TAG.

2) The UE (the base station) receives (transmits) a message scheduling uplink transmission related to the two TAGs.
The message may be based on RRC message, MAC CE, or DCI.
3) The UE (the base station) transmits (receives) an uplink signal based on the message.

The transmission of the uplink signal may be performed based on the proposals 1 and 2.

The UE/base station operation is merely an example, and each operation (or step) is not necessarily essential. The TCI update operation related to two TA operation of the UE according to the above-described embodiments may be omitted or added depending on the UE/base station implementation method.

From an implementation perspective, operations of the UE/base station according to the above-described embodiments (e.g., operations based on at least one of the proposals 1 and 2) can be processed by a device (e.g., processors 110 and 210 of FIG. 6) of FIG. 6 to be described below.

Further, the operations of the UE/base station according to the above-described embodiments (e.g., operations based on at least one of the proposals 1 and 2) can be stored in a memory (e.g., memories 140 and 240 of FIG. 6) in the form of commands/programs (e.g., instructions, executable codes) for running at least one processor (e.g., processors 110 and 210 of FIG. 6).

Below, the above-described embodiments are described in detail from a UE/base station operation perspective with reference to FIGS. 4 and 5. Methods described below are merely distinguished for convenience of explanation. Thus, it is obvious that partial configuration of any method can be substituted or combined with partial configuration of another method.

FIG. 4 is a flowchart illustrating a method performed by a user equipment according to an embodiment of the present disclosure.

Referring to FIG. 4, a method performed by a user equipment according to an embodiment of the present disclosure comprises a step S410 of receiving a cell group configuration, a step S420 of receiving configuration information related to a first serving cell, and a step S430 of transmitting an uplink signal related to the first serving cell.

In the step S410, the UE receives a cell group configuration from a base station. The cell group configuration includes a list of serving cells on which a simultaneous update of unified Transmission Configuration Indicator (TCI) states is applied.

For example, the cell group configuration may be based on a higher layer parameter *CellGroupConfig.* For example, the list may refer to a CC list for the simultaneous update of the unified TCI state. Specifically, the list may be based on a higher layer parameter simultaneousU-TCI-UpdateList1, simultaneousU-TCI-UpdateList2, simultaneousU-TCI-UpdateList3, or simultaneousU-TCI-UpdateList4.

In the step S420, the UE receives, from the base station, configuration information related to a first serving cell of the serving cells. A first Timing Advance Group (TAG) ID and a second TAG ID are configured based on the configuration information.

For example, the configuration information may be based on the higher layer parameter *ServingCellConfig* (see Table 6). The first TAG ID may be tag-id, and the second TAG ID may be tag2-id.

In the step S430, the UE transmits an uplink signal related to the first serving cell to the base station based on a unified TCI state related to a second serving cell of the serving cells.

For example, the uplink signal may be a signal scheduled/triggered based on Downlink Control Information (DCI). For example, the uplink signal may be a Physical Uplink Shared Channel (PUSCH), a Physical Uplink Control CHannel (PUCCH), a Sounding Reference Signal (SRS), or a Physical Random Access CHannel (PRACH).

For example, the unified TCI state may be i) a first TCI state (e.g., a first joint TCI state or a first UL TCI state) related to first COntrol REsource SETs (CORESETs) or ii) a second TCI state (e.g., a second joint TCI state or a second UL TCI state) related to second CORESETs. The first CORESETs may be based on a first CORESET pool index. The second CORESETs may be based on a second CORESET pool index.

For example, a spatial domain filter may be determined based on the unified TCI state. Specifically, the uplink signal may be transmitted based on the spatial domain filter related to the unified TCI state.

According to an embodiment, an uplink timing related to the uplink signal may be determined based on a TAG with an association with the unified TCI state. The TAG may be related to the first TAG ID or the second TAG ID of the first serving cell to which the unified TCI state is applied. The present embodiment may be based on the method b) of the proposal 2-2.

The serving cells may correspond to component carriers (CCs). In other words, the list of the serving cells may be interpreted/replaced with a CC list.

The second serving cell may be based on a reference CC among the CCs corresponding to the serving cells. For example, the second serving cell may be a serving cell configured/defined with unified TCI state configurations (e.g., dl-OrJointTCI-StateToAddModList or ul-TCI-ToAddModList) among serving cells configured with unifiedTCI-StateType (e.g., joint or separate).

The first serving cell may be based on a first CC different from the reference CC among the CCs corresponding to the serving cells. For example, the first serving cell may be a serving cell configured with a higher layer parameter (e.g., UnifiedTCI-StateRef) representing the second serving cell among serving cells configured with unifiedTCI-StateType (e.g., joint or separate). The UnifiedTCI-StateRef represents a serving cell (e.g., the second serving cell/reference CC) configured/defined with the unified TCI state configurations (e.g., d1-OrJointTCI-StateToAddModList or ul-TCI-ToAdd-ModList) and a BandWidth Part (BWP) (e.g., a BWP/reference BWP of the second serving cell).

In a bandwidth part (BWP) of the first CC, the unified TCI state configurations may be absent. In this case, unified TCI state(s) configured/defined to the reference CC may be used. Specifically, the unified TCI state(s) may be related to a reference bandwidth part (BWP) of the reference CC.

According to an embodiment, the unified TCI state may include TAG ID information (e.g., tag-id-ptr). Based on the TAG ID information being set to a first value (e.g., n0), the TAG may be a first TAG indicated by the first TAG ID of the first serving cell. Based on the TAG ID information being set to a second value (e.g., n1), the TAG may be a second TAG indicated by the second TAG ID of the first serving cell.

For example, the first TAG may be identical to or different from a TAG indicated by a first TAG ID configured for the second serving cell. The second TAG may be identical to or different from a TAG indicated by a second TAG ID configured for the second serving cell. This is described in detail below.

For example, two TAGs configured for the second serving cell may be i) TAG#1 and ii) TAG#2, and two TAGs configured for the first serving cell may be i) TAG#3 and ii) TAG#4. In this case, the TAGs (TAG#1 and TAG#2) indicated by the first TAG ID and the second TAG ID of the second serving cell may be different from the TAGs (TAG#3 and TAG#4) indicated by the first TAG ID and the second TAG ID of the first serving cell. That is, the two TAGs configured to each of the first and second serving cells as described above may be different from each other.

For another example, two TAGs configured for the second serving cell may be i) TAG#1 and ii) TAG#2, and two TAGs configured for the first serving cell may be i) TAG#1 and ii) TAG#4. In this case, the TAG (TAG#1) indicated by the first TAG ID of the second serving cell is the same as the TAG (TAG#1) indicated by the first TAG ID of the first serving cell. The TAG (TAG#2) indicated by the second TAG ID of the second serving cell is different from the TAG (TAG#4) indicated by the second TAG ID of the first serving cell. That is, first TAGs of the two TAGs configured to each of the first and second serving cells as described above may be the same, and second TAGs may be different.

For another example, two TAGs configured for the second serving cell may be i) TAG#2 and ii) TAG#3, and two TAGs configured for the first serving cell may be i) TAG#1 and ii) TAG#3. In this case, the TAG (TAG#2) indicated by the first TAG ID of the second serving cell is different from the TAG (TAG#1) indicated by the first TAG ID of the first serving cell. The TAG (TAG#3) indicated by the second TAG ID of the second serving cell is the same as the TAG (TAG#3) indicated by the second TAG ID of the first serving cell. That is, first TAGs of the two TAGs configured to each of the first and second serving cells as described above may be different, and second TAGs may be the same.

According to an embodiment, the unified TCI state may be a joint TCI state or a separate TCI state. For example, the parameter unifiedTCI-StateType may be set to joint. The unified TCI state may be a joint TCI state for UL and DL operations. For example, the parameter unifiedTCI-StateType may be set to separate. The unified TCI state may be a UL TCI state for the UL operation.

The method may further comprise receiving an MAC CE. Specifically, the UE receives a Medium Access Control-Control Element (MAC CE) from the base station. The MAC CE may be related to activation and/or deactivation of the unified TCI states. That is, the MAC CE may be a MAC CE based on FIG. 3. Based on a serving cell indicated based on the MAC CE being a part of the serving cells, the MAC CE may be applied to the serving cells.

The unified TCI state may be a unified TCI state indicated by Downlink Control Information (DCI) among unified TCI states activated based on the MAC CE.

The operations based on the steps S410 to S430 and the MAC CE reception step described above may be implemented by a device of FIG. 6. For example, a UE 200 may control one or more transceivers 230 and/or one or more memories 240 so as to perform the operations based on the steps S410 to S430 and the MAC CE reception step.

Below, the above-described embodiments are described in detail from a perspective of base station operation.

Steps S510 to S530 and MAC CE transmission step described below correspond to the steps S410 to S430 and the MAC CE reception step described with reference to FIG. 4. Considering the above correspondence, redundant description is omitted. That is, the detailed description of the base station operation described below can be replaced with the description/embodiment of FIG. 4 corresponding to the base station operation.

For example, the description/embodiment of the steps S410 to S430 of FIG. 4 can be additionally applied to the base station operation of the steps S510 to S530 described below.

For example, the description/embodiment of the MAC CE reception step can be additionally applied to the base station operation of the MAC CE transmission step described below.

FIG. 5 is a flowchart illustrating a method performed by a base station according to another embodiment of the present disclosure.

Referring to FIG. 5, a method performed by a base station according to another embodiment of the present disclosure comprises a step S510 of transmitting a cell group configuration, a step S520 of transmitting configuration information related to a first serving cell, and a step S530 of receiving an uplink signal related to the first serving cell.

In the step S510, the base station transmits a cell group configuration to a UE. The cell group configuration includes a list of serving cells on which a simultaneous update of unified Transmission Configuration Indicator (TCI) states is applied.

In the step S520, the base station transmits, to the UE, configuration information related to a first serving cell of the serving cells. A first Timing Advance Group (TAG) ID and a second TAG ID are configured based on the configuration information.

In the step S530, the base station receives an uplink signal related to the first serving cell from the UE based on a unified TCI state related to a second serving cell of the serving cells.

According to an embodiment, an uplink timing related to the uplink signal may be determined based on a TAG with an association with the unified TCI state. The TAG may be related to the first TAG ID or the second TAG ID of the first serving cell to which the unified TCI state is applied.

The method may further comprise transmitting an MAC CE. Specifically, the base station transmits a Medium Access Control-Control Element (MAC CE) to the UE.

The operations based on the steps S510 to S530 and the MAC CE transmission step described above may be implemented by a device of FIG. 6. For example, a base station 100 may control one or more transceivers 130 and/or one or more memories 140 so as to perform the operations based on the steps S510 to S530 and the MAC CE transmission step.

A device to which an embodiment of the present disclosure is applicable (a device implementing the method/operation according to an embodiment of the present disclosure) is described below with reference to FIG. 6.

FIG. 6 illustrates configuration of a first device and a second device according to an embodiment of the present disclosure.

A first device 100 may include a processor 110, an antenna unit 120, a transceiver 130, and a memory 140.

The processor 110 may perform baseband-related signal processing and include a higher layer processing unit 111 and a physical layer processing unit 115. The higher layer processing unit 111 may process operations of the MAC layer, the RRC layer, or higher layers. The physical layer processing unit 115 may process the operation of the PHY layer. For example, if the first device 100 is a base station (BS) device in BS-UE communication, the physical layer processing unit 115 may perform uplink reception signal processing, downlink transmission signal processing, and the like. For example, if the first device 100 is a first UE device in inter-UE communication, the physical layer processing unit 115 may performs downlink reception signal processing, uplink transmission signal processing, sidelink transmission signal processing, and the like. The processor 110 may control the overall operation of the first device 100 in addition to performing the baseband-related signal processing.

The antenna unit 120 may include one or more physical antennas and support MIMO transmission/reception if the antenna unit 120 includes a plurality of antennas. The transceiver 130 may include a radio frequency (RF) transmitter and an RF receiver. The memory 140 may store information processed by the processor 110 and software, operating systems, and applications related to the operation of the first device 100. The memory 140 may also include components such as a buffer.

The processor 110 of the first device 100 may be configured to implement the operation of the BS in the BS-UE communication (or the operation of the first UE device in the inter-UE communication) in embodiments described in the present disclosure.

The second device 200 may include a processor 210, an antenna unit 220, a transceiver 230, and a memory 240.

The processor 210 may perform baseband-related signal processing and include a higher layer processing unit 211 and a physical layer processing unit 215. The higher layer processing unit 211 may process the operation of the MAC layer, the RRC layer, or higher layers. The physical layer processing unit 215 may process the operation of the PHY layer. For example, if the second device 200 is a UE device in BS-UE communication, the physical layer processing unit 215 may perform downlink reception signal processing, uplink transmission signal processing, and the like. For example, if the second device 200 is a second UE device in inter-UE communication, the physical layer processing unit 215 may perform downlink reception signal processing, uplink transmission signal processing, sidelink reception signal processing, and the like. The processor 210 may control the overall operation of the second device 200 in addition to performing the baseband-related signal processing.

The antenna unit 220 may include one or more physical antennas and support MIMO transmission/reception if the antenna unit 220 includes a plurality of antennas. The transceiver 230 may include an RF transmitter and an RF receiver. The memory 240 may store information processed by the processor 210 and software, operating systems, and applications related to the operation of the second device 200. The memory 240 may also include components such as a buffer.

The processor 210 of the second device 200 may be configured to implement the operation of the UE in the BS-UE communication (or the operation of the second UE device in the inter-UE communication) in embodiments described in the present disclosure.

The descriptions for the BS and the UE in the BS-UE communication (or the first UE device and the second UE device in the inter-UE communication) in the examples of the present disclosure can be equally applied to the operations of the first device 100 and the second device 200, and redundant descriptions are omitted.

The wireless communication technology implemented in the devices 100 and 200 according to the present disclosure may further include narrowband Internet of Things (NB-IoT) for low-power communication in addition to LTE, NR, and 6G. For example, the NB-IoT technology may be an example of a low power wide area network (LPWAN) technology and may be implemented in standards such as LTE Cat NB1 and/or LTE Cat NB2. The NB-IoT technology is not limited to the above-described names.

Additionally or alternatively, the wireless communication technology implemented in the devices 100 and 200 according to the present disclosure may perform communication based on LTE-M technology. For example, the LTE-M technology may be an example of the LPWAN technology, and may be called by various names such as enhanced machine type communication (eMTC). For example, the LTE-M technology may be implemented with at least one of various standards such as 1) LTE CAT 0, 2) LTE Cat M1, 3) LTE Cat M2, 4) LTE non-BL (non-Bandwidth Limited), 5) LTE-MTC, 6) LTE machine type communication, and/or 7) LTE M. The LTE-M technology is not limited to the above-mentioned names.

Additionally or alternatively, the wireless communication technology implemented in the devices 100 and 200 according to the present disclosure may include at least one of ZigBee, Bluetooth, and low power wide area network (LPWAN) in consideration of low power communication, and is not limited to the above-mentioned names. For example, the ZigBee technology may create personal area networks (PAN) related to small/low-power digital communication based on various standards such as IEEE 802.15.4, and may be called by various names.

**Claims**

1. A method performed by a user equipment (UE) comprising:

   receiving a cell group configuration, wherein the cell group configuration includes a list of serving cells for which a simultaneous update of unified Transmission Configuration Indicator (TCI) states is applied;
   receiving configuration information that is related to a first serving cell of the serving cells, wherein a first Timing Advance Group (TAG) ID and a second TAG ID are configured based on the configuration information; and
   transmitting an uplink signal related to the first serving cell, based on an unified TCI state related to a second serving cell of the serving cells,
   wherein an uplink timing related to the uplink signal is determined based on a TAG having an association with the unified TCI state,
   wherein the TAG is related to the first TAG ID or the second TAG ID of the first serving cell to which the unified TCI state is applied.

2. The method of claim 1, wherein the serving cells correspond to Component Carriers (CCs).

3. The method of claim 1, wherein the second serving cell is based on a reference CC among CCs corresponding to the serving cells.

4. The method of claim 1, wherein the first serving cell is based on a first CC different from a reference CC among CCs corresponding to the serving cells.

5. The method of claim 4, wherein unified TCI state configurations are absent in a bandwidth part (BWP) of the first CC.

6. The method of claim 5, wherein the unified TCI state is related to a reference BWP of the reference CC.

7. The method of claim 1, wherein the unified TCI state includes TAG ID information,

   wherein, based on the TAG ID information being set to a first value, the TAG is a first TAG indicated by the first TAG ID of the first serving cell, and
   wherein, based on the TAG ID information being set to a second value, the TAG is a second TAG indicated by the second TAG ID of the first serving cell.

8. The method of claim 7, wherein the first TAG is identical to or different from a TAG indicated by a first TAG ID configured for the second serving cell.

9. The method of claim 7, wherein the second TAG is identical to or different from a TAG indicated by a second TAG ID configured for the second serving cell.

10. The method of claim 1, wherein the unified TCI state is a joint TCI state or a separate TCI state.

11. The method of claim 1, further comprising receiving a Medium Access Control-Control Element (MAC CE),

    wherein the MAC CE is related to activation and/or deactivation of the unified TCI states, and
    wherein based on a serving cell indicated based on the MAC CE being a part of the serving cells, the MAC CE is applied to the serving cells.

12. The method of claim 11, wherein the unified TCI state is a unified TCI state indicated by Downlink Control Information (DCI) among unified TCI states activated based on the MAC CE.

13. A user equipment (UE) comprising:

    one or more transceivers;
    one or more processors; and
    one or more memories connected to the one or more processors and storing instructions,
    wherein the instructions, based on being executed by the one or more processors, configure the one or more processors to perform all steps of a method according to any one of claims 1 to 12.

14. A device comprising:

    one or more memories; and
    one or more processors operably connected to the one or more memories,
    wherein the one or more memories store instructions that, based on being executed by the one or more processors, configure the one or more processors to perform all steps of a method according to any one of claims 1 to 12.

15. One or more non-transitory computer readable mediums storing instructions,
    wherein the instructions executable by one or more processors configure one or more processors to perform all steps of a method according to any one of claims 1 to 12.

16. A method performed by a base station comprising:

    transmitting a cell group configuration, wherein the cell group configuration includes a list of serving cells for which a simultaneous update of unified Transmission Configuration Indicator (TCI) states is applied;
    transmitting configuration information that is related to a first serving cell of the serving cells, wherein a first Timing Advance Group (TAG) ID and a second TAG ID are configured based on the configuration information; and
    receiving an uplink signal related to the first serving cell, based on an unified TCI state related to a second serving cell of the serving cells,

wherein an uplink timing related to the uplink signal is determined based on a TAG having an association with the unified TCI state,

wherein the TAG is related to the first TAG ID or the second TAG ID of the first serving cell to which the unified TCI state is applied.

17. A base station comprising:

one or more transceivers;

one or more processors; and

one or more memories connected to the one or more processors and storing instructions,

wherein the instructions, based on being executed by the one or more processors, configure the base station to perform all steps of a method according to claim 16.

【FIG. 1】

| | | |
|---|---|---|
| R | Timing Advance Command | Oct 1 |
| Timing Advance Command | UL Grant | Oct 2 |
| UL Grant | | Oct 3 |
| UL Grant | | Oct 4 |
| UL Grant | | Oct 5 |
| Temporary C-RNTI | | Oct 6 |
| Temporary C-RNTI | | Oct 7 |

【FIG. 2】

| | | |
|---|---|---|
| TAG ID | Timing Advance Command | Oct 1 |

【FIG. 3】

| | | | | | |
|---|---|---|---|---|---|
| R | Serving Cell ID | | DL BWP ID | | Oct 1 |

| R | R | R | R | R | R | UL BWP ID | | Oct 2 |
|---|---|---|---|---|---|---|---|---|
| $P_1$ | $P_2$ | $P_3$ | $P_4$ | $P_5$ | $P_6$ | $P_7$ | $P_8$ | Oct 3 |
| D/U | TCI state ID 1 | | | | | | | Oct 4 |
| D/U | TCI state ID 2 | | | | | | | Oct 5 |

...

| D/U | TCI state ID N | Oct N+3 |
|---|---|---|

【FIG. 4】

```
              ( Start )
                  |
                  v
  Receive cell group configuration        ~S410
                  |
                  v
  Receive configuration information related to
            first serving cell             ~S420
                  |
                  v
  Transmit uplink signal related to first serving cell   ~S430
                  |
                  v
               ( End )
```

【FIG. 5】

```
                    ┌─────────┐
                    │  Start  │
                    └─────────┘
                         │
                         ▼
┌───────────────────────────────────────────────┐
│        Transmit cell group configuration        │────S510
└───────────────────────────────────────────────┘
                         │
                         ▼
┌───────────────────────────────────────────────┐
│  Transmit configuration information related to  │────S520
│              first serving cell                 │
└───────────────────────────────────────────────┘
                         │
                         ▼
┌───────────────────────────────────────────────┐
│ Receive uplink signal related to first serving cell │────S530
└───────────────────────────────────────────────┘
                         │
                         ▼
                    ┌─────────┐
                    │   End   │
                    └─────────┘
```

【FIG. 6】

## INTERNATIONAL SEARCH REPORT

| International application No. |
| --- |
| **PCT/KR2024/095945** |

| A. | CLASSIFICATION OF SUBJECT MATTER |
| --- | --- |

**H04W 72/231**(2023.01)i; **H04W 56/00**(2009.01)i; **H04W 72/0453**(2023.01)i

According to International Patent Classification (IPC) or to both national classification and IPC

| B. | FIELDS SEARCHED |
| --- | --- |

Minimum documentation searched (classification system followed by classification symbols)

H04W 72/231(2023.01); H04L 5/00(2006.01); H04W 56/00(2009.01); H04W 72/04(2009.01); H04W 72/0457(2023.01); H04W 72/23(2023.01); H04W 72/232(2023.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: TCI(transmission configuration indicator), 업데이트(update), TAG(timing advance group), CC(component carrier), 상향링크(uplink)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | WO 2023-140679 A1 (LG ELECTRONICS INC.) 27 July 2023 (2023-07-27) <br> See paragraphs [0105]-[0330]. | 1-17 |
| Y | KR 10-2023-0027038 A (LG ELECTRONICS INC.) 27 February 2023 (2023-02-27) <br> See paragraphs [0120]-[0400]. | 1-17 |
| Y | US 2022-0272685 A1 (SAMSUNG ELECTRONICS CO., LTD.) 25 August 2022 (2022-08-25) <br> See paragraphs [0450]-[0454]. | 3-6 |
| A | KR 10-2023-0092797 A (ASUSTEK COMPUTER INCORPORATION) 26 June 2023 (2023-06-26) <br> See paragraphs [0498]-[0554]. | 1-17 |
| A | WO 2023-080706 A1 (LG ELECTRONICS INC.) 11 May 2023 (2023-05-11) <br> See claims 1-13. | 1-17 |

| ☐ Further documents are listed in the continuation of Box C. | ☑ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **21 November 2024** | **21 November 2024** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/095945**

| Patent document cited in search report | | | Publication date (day/month/year) | Patent family member(s) | | | Publication date (day/month/year) |
|---|---|---|---|---|---|---|---|
| WO | 2023-140679 | A1 | 27 July 2023 | KR | 10-2024-0134337 | A | 09 September 2024 |
| KR | 10-2023-0027038 | A | 27 February 2023 | US | 2023-0284045 | A1 | 07 September 2023 |
| | | | | WO | 2021-261853 | A1 | 30 December 2021 |
| US | 2022-0272685 | A1 | 25 August 2022 | CN | 116848794 | A | 03 October 2023 |
| | | | | EP | 4285501 | A1 | 06 December 2023 |
| | | | | KR | 10-2023-0143610 | A | 12 October 2023 |
| | | | | WO | 2022-173262 | A1 | 18 August 2022 |
| KR | 10-2023-0092797 | A | 26 June 2023 | CN | 116266962 | A | 20 June 2023 |
| | | | | US | 2023-0199638 | A1 | 22 June 2023 |
| WO | 2023-080706 | A1 | 11 May 2023 | CN | 118202726 | A | 14 June 2024 |
| | | | | EP | 4429338 | A1 | 11 September 2024 |
| | | | | KR | 10-2024-0100345 | A | 01 July 2024 |

Form PCT/ISA/210 (patent family annex) (July 2022)